# EUROPEAN PATENT APPLICATION

(11) **EP 2 784 647 A1**
(43) Date of publication of application: **01.10.2014**
(21) Application number: 13160986.9
(22) Date of filing: 26.03.2013
(51) Int. Cl.: G06F 3/0483, G06F 3/0488, G06F 3/0481

(54) **Method for organizing attachment of ressources to virtual screen(s) of worksources of an electronic equipment**

(71) Applicant: ALCATEL LUCENT, 92100 Boulogne-Billancourt (FR)
(72) Inventor: Turkiewicz, Pierre, 91620 Nozay (FR); Rebierre, Nicolas, 91620 Nozay (FR); Kostadinov, Dimitre Davidov, 91620 Nozay (FR)
(74) Representative: Camus, Olivier Jean-Claude

(57) **Abstract**

A method is intended for organizing display of graphical elements, each representing a service, on a touchscreen (TS) of an electronic equipment (EE) comprising workspaces (WS1, WS2) and initially attached to an area of a virtual screen associated to a first workspace (WS1). This method comprises a step (i) during which a first predefined user gesture is detected in a zone of the touchscreen (TS) where a graphical element is displayed, and a step (ii) during which one attaches this graphical element to its area in at least one virtual screen associated to every other workspace, so that the service represented by this graphical element could be accessed by the user when he acts on this graphical element while the virtual screen of another workspace than the first one (WS1) is displayed on the touchscreen (TS).

## Description

### Technical field

The present invention relates to electronic equipments, and more precisely to the organization of resources into the virtual screen(s) associated to the workspaces of such electronic equipments.

In the following description, the word "resource" designates any graphical element representing at least one service that can run into or be controlled by an electronic equipment with a touchscreen and processing means capable of executing sets of instructions. For instance a service can be an application or a contact shortcut.

### Background of the invention

The number of services running into or accessible through an electronic equipment of the type above defined increases quickly. But it is generally impossible and not desirable for this type of electronic equipment to display all the resources representing the services it can execute or access on its single touchscreen. This is notably the case of smartphones. Therefore various means have been proposed to virtually extend the display area of an electronic equipment. Thus, it has been proposed to define a workspace associated to one or more virtual screens, or several workspaces each associated to one or more virtual screens, or else contextual sets of virtual screens, and to navigate through them by a lot of means such as vocal commands, zoom capabilities or user gestures.

But users need a way to easily access a resource when they need it. In practice, three main types of resources corresponding to three levels of access can be considered: key resources that are used at all times, major resources that are used frequently, and minor resources that are used occasionally. Most of the users need to have a permanent and immediate access to key resources, a fairly quick access to major resources, and a predictable access to minor resources. So, users need to indicate the access level of each resource on their electronic equipment, which can be a very cumbersome process.

Smartphones invite users to interact with virtual resource laid out inside a virtual display space (or workspace) composed of various resource containers (single resource shortcut slots, resource folders, docks of N favorite resource shortcuts, virtual screen(s) able to contain M resource shortcuts or folders, for instance), whose content can be changed along several dimensions (short axis and long axis of the smartphone, current identified user, for instance). In such a workspace, resource shortcuts are positioned in specific zone(s) or area(s) having known coordinates and corresponding to a specific position in a specific resource container.

Resource containers allow users to place shortcuts to resources and are each dedicated to a single resource access level (that is accessed often, frequently or very seldom). But, users are missing an intuitive and clear way to define the access level of each resource regardless of the resource container, and to distinguish between the different resource access levels. So, users must organize and customize themselves the graphical layout of their smartphones by placing resource shortcuts in fixed zones of a virtual screen associated to a workspace.

### Summary of the invention

So the invention aims notably at facilitating the access to key resources (or graphical elements) by allowing users to bind resources to an area of a touchscreen through a predefined interaction with the latter.

To this effect the invention notably provides a method intended for automatically organizing display of graphical elements, each representing at least one service, on a touchscreen of an electronic equipment comprising at least two workspaces, each graphical element being initially attached to an area of a virtual screen associated to a first workspace. This method comprises:
- a step (i) during which a first predefined user gesture is detected in a zone of the touchscreen where the graphical element is displayed, and
- a step (ii) during which one attaches the graphical element to its area in at least one virtual screen associated to every other workspace, so that the service represented by the graphical element could be accessed by the user when he acts on this graphical element while the virtual screen of another workspace than the first one is displayed on the touchscreen.

The method according to the invention may include additional characteristics considered separately or combined, and notably:
- the first predefined user gesture may be a first rotation in a first chosen direction (carried out by at least one finger extremity of the user around the displayed graphical element);
- in step (ii), when a workspace is associated to at least two virtual screen, one may attach the graphical element to its area in each one of these virtual screens associated to this workspace. In a variant, one may attach the graphical element to its area in a chosen one of the virtual screens associated to this workspace;
- in step (ii), when another graphical element is detected in the area of a virtual screen associated to another workspace than the first one, one may compute a new area for the considered graphical element, so that the service represented by the latter graphical element could be accessed by the user when he acts on this considered graphical element in this new area while the virtual screen of this other workspace is displayed on the touchscreen. In a variant, one may compute a new area for the other graphical element, so that the service represented by the latter other graphical element could be accessed by the user when he acts on this other graphical element in this new area while the virtual screen of this other workspace is displayed on the touchscreen;
- it may comprise a step (iii) during which a second predefined user gesture is detected in a zone of the touchscreen where the graphical element is displayed into the virtual screen associated to the first workspace, and a step (iv) during which one stops attaching this graphical element to its area in each virtual screen associated to each workspace different from the first one, so that this graphical element be no more displayed into each virtual screen associated to each workspace different from the first one;
- it may comprise a step (v) during which a second predefined user gesture is detected in a zone of the touchscreen where the graphical element is displayed into the virtual screen associated to a second workspace different from the first one, and a step (vi) during which one stops attaching this graphical element to its area in each virtual screen associated to this second workspace, so that this graphical element be no more displayed into each virtual screen associated to the second workspace;
- the second predefined user gesture may be a second rotation in a second chosen direction opposite to the first direction (and carried out by at least one finger extremity of the user around the displayed graphical element);
- it may comprise a step (vi) during which a third predefined user gesture is detected in a zone of the touchscreen where another graphical element is displayed into another area of a virtual screen associated to a workspace, and a step (vii) during which one may attach this other graphical element to this other area in each virtual screen associated to at least this workspace, so that the service represented by this other graphical element could be accessed by the user when he acts on this other graphical element while the virtual screen of at least this workspace is displayed on the touchscreen;
   ➢ the third predefined user gesture may be a third rotation in a first chosen direction (carried out by at least one finger extremity of the user around the displayed other graphical element);
   ➢ it may comprise a step (viii) during which a fourth predefined user gesture is detected in a zone of the touchscreen where the other graphical element is displayed into a virtual screen associated to a workspace, and a step (ix) during which one may stop attaching this other graphical element to its other area in each virtual screen associated to at least this workspace, so that this other graphical element be no more displayed into each virtual screen associated to at least this workspace;
   ➢ the fourth predefined user gesture may be a fourth rotation in a second chosen direction opposite to the first direction (carried out by at least one finger extremity of the user around the displayed other graphical element);
   - once the graphical element has been newly attached to an area of at least one virtual screen associated to each workspace, it may be displayed with an appearance that is different from the one it possessed before this attachment.

The invention also provides a computer program product comprising a set of instructions arranged, when it is executed by processing means, for performing a method such as the one above introduced to allow organization of the display of a graphical element representing at least one service on a touchscreen of an electronic equipment comprising at least two workspaces.

The invention also provides a device intended for equipping an electronic equipment comprising a touchscreen and at least two workspaces each associated with at least one virtual screen, and a first one of these workspaces being associated to a virtual screen comprising an area to which a graphical element (representing at least one service) is initially attached.

This device comprises:
- first processing means arranged for detecting a first predefined user gesture in a zone of the touchscreen where the graphical element is displayed, and
- a second processing means arranged, when the first predefined user gesture has been detected, for attaching the graphical element to its area in at least one virtual screen associated to every other workspace, so that the service represented by this graphical element could be accessed by the user when he acts on this graphical element while the virtual screen of another workspace than the first one is displayed on the touchscreen.

### Brief description of the figures

Other features and advantages of the invention will become apparent on examining the detailed specifications hereafter and the appended drawings, wherein:

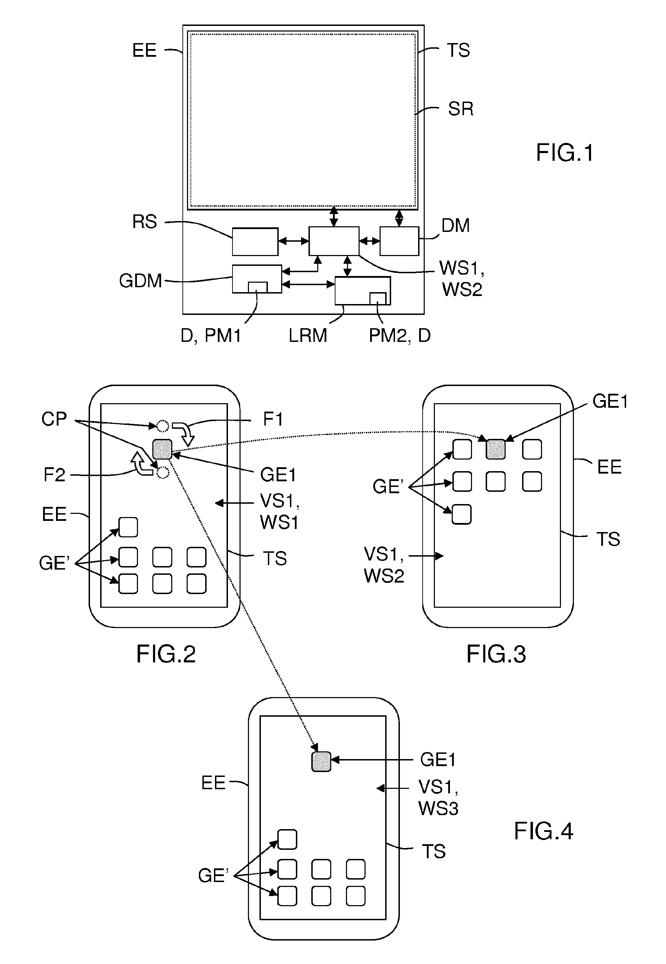

- figure 1 schematically and functionally illustrates an electronic equipment comprising a device according to the invention,
- figure 2 schematically illustrates the electronic equipment of figure 1 with its touchscreen displaying an example of first virtual screen associated to a first workspace, after a first predefined gesture has been detected around a first graphical element,
- figures 3 schematically illustrates the electronic equipment of figure 1 with its touchscreen displaying an example of first virtual screen associated to a second workspace, after a first graphical element has been attached to it following upon detection of the first predefined gesture illustrated in figure 2,
- figures 4 schematically illustrates the electronic equipment of figure 1 with its touchscreen displaying an example of first virtual screen associated to a third workspace, after a first graphical element has been attached to it following upon detection of the first predefined gesture illustrated in figure 2,

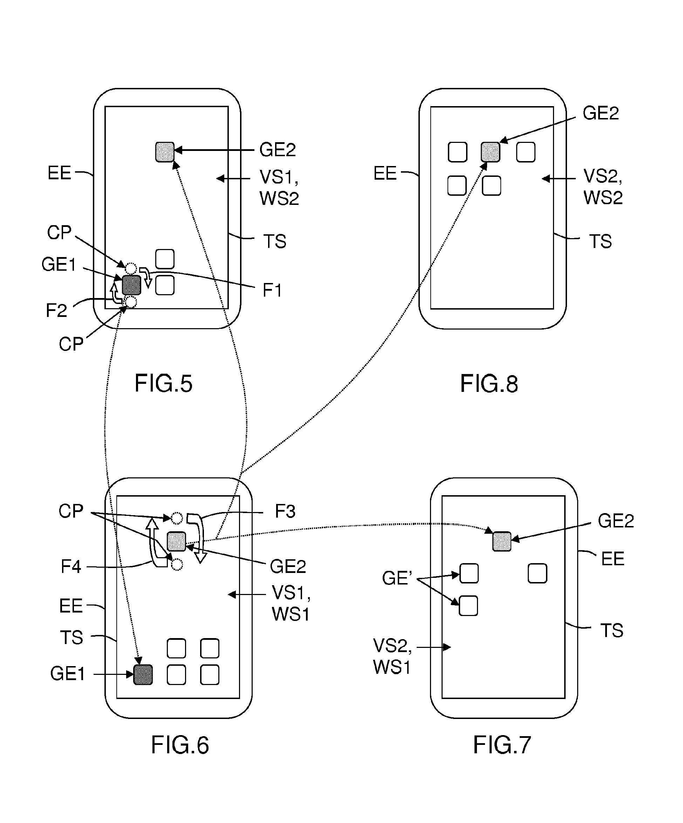

- figure 5 schematically illustrates the electronic equipment of figure 1 with its touchscreen displaying another example of first virtual screen associated to a second workspace, after a first predefined gesture has been detected around a first graphical element, and after a second graphical element has been attached to it following upon detection of a second predefined gesture illustrated in figure 6,
- figures 6 schematically illustrates the electronic equipment of figure 1 with its touchscreen displaying another example of first virtual screen associated to a first workspace, after a first graphical element has been attached to it following upon detection of the first predefined gesture illustrated in figure 5, and after the second predefined gesture has been detected around a second graphical element,
- figure 7 schematically illustrates the electronic equipment of figure 1 with its touchscreen displaying another example of second virtual screen associated to the first workspace, after the second graphical element has been attached to it following upon detection of the second predefined gesture illustrated in figure 6, and
- figure 8 schematically illustrates the electronic equipment of figure 1 with its touchscreen displaying another example of second virtual screen associated to the second workspace, after the second graphical element has been attached to it following upon detection of the second predefined gesture illustrated in figure 6.

### Detailed description of the preferred embodiment

The appended drawings may serve not only to complete the invention, but also to contribute to its understanding, if need be.

The invention aims, notably, at offering a method, and an associated device D, intended for automatically organizing display of graphical elements (or resources) GEi, each representing at least one service, on a touchscreen TS of an electronic equipment EE comprising at least two workspaces WSj.

In the following description it will be considered, as an example, that the electronic equipment EE is a smartphone. But the invention is not limited to this type of electronic equipment. Indeed, it concerns any type of electronic equipment comprising a touchscreen TS and at least two workspaces WSj. So, it could be also a personal digital assistant, an electronic tablet, a table-mounted touchscreen, a game console or a (connected) television.

Moreover, in the following description it will be considered, as an example, that the graphical elements (or resources) GEi are icons. But the invention is not limited to this type of graphical element (or resource). Indeed, it concerns any type of graphical element (or resource) representing at least one service that can run into or be controlled by an electronic equipment, and notably applications, telephonic contacts, GPS destinations, pictures, videos, actions (such as switching off the electronic equipment, for instance), files or shortcuts to external resources. So, it could be also widget, for instance.

As illustrated in figure 1, an electronic equipment EE according to the invention comprises at least a touchscreen TS, associated with sensors SR, a display module DM, a resource manager RS, at least two workspaces WSj, a local gesture detection module GDM, a layout and rendering decision module LRM, and a device D.

The display module DM is responsible for the display on the touchscreen TS, for the generation of audio output, and for any other feedback (such as vibrations).

The sensors SR are responsible for the capture of events relative to user interaction with the touchscreen TS.

The resource manager RS is arranged for providing an abstraction layer for the different classes of graphical elements (or resources) GEi that represent service(s) running into or controllable by the electronic equipment EE and that may be attached, directly or indirectly, to virtual screen(s) VSk associated to workspaces WSj of this electronic equipment EE.

Here, the word "attached" means anchored or bound to a graphical area of the virtual display space.

Each workspace WSj is responsible for allowing the user to organize the access to at least key graphical elements GEi, and handles events from the user (sensor) and from the layout and rendering decision module LRM to control the display of graphical elements GEi to the user.

The local gesture detection module GDM is responsible for detecting fragments of gestures based on information relative to user interactions events detected by the sensors SR. For instance, it may recognize at least one predefined user gesture, such as a rotation carried out by one or two finger extremities of the user around a graphical element GEi.

The layout and rendering decision module LRM is in charge of the graphical layout and rendering of graphical elements GEi on the touchscreen TS. It takes into account graphical element bindings (i.e. a set of coordinates in a virtual display space) to decide how to place the graphical elements GEi on a virtual screen VSk that is temporarily displayed by the touchscreen TS, and how to represent them to allow the user to understand which graphical elements are bound and how. It also takes into account the status of a user gesture and applies an appropriate feedback (haptic, sound, animation, for instance) on the operated graphical elements GEi.

As mentioned above, the invention proposes notably a method intended for automatically organizing display of graphical elements (or resources) GEi on the touchscreen TS of the electronic equipment EE.

This method comprises at least two steps (i) and (ii).

The method steps may be implemented by first PM1 and second PM2 processing means (or module) of the device D.

For instance and as illustrated in the non-limiting example of figure 1, the first processing means (or module) PM1 may be located into the local gesture detection module GDM, while the second processing means (or module) PM2 may be located into the layout and rendering decision module LRM.

So, this device D may be made of software modules (and in this case it constitutes a computer program product comprising a set of instructions arranged for performing the method when it is executed by processing means of the electronic equipment EE). But this is not mandatory. Indeed, it may be made of a combination of electronic circuit(s) (or hardware module(s)) and software modules.

During step (i) of the method a first predefined user gesture is detected in a zone of the touchscreen TS where a first graphical element GE1 is displayed, from the information relative to user interactions events detected by the sensors SR. This predefined gesture detection is performed by the local gesture detection module GDM, and more precisely by the first processing means (or module) PM1 of the device D.

As illustrated in the non-limiting example of figure 2, one considers here that the first graphical element GE1 has been initially attached to a chosen area of the first virtual screen VS1 that is associated to a first workspace WS1. So, the set of coordinates of this area (and therefore of the first graphical element GE1) in a virtual display space can be easily obtained (in step (ii)) by the layout and rendering decision module LRM from the first workspace WS1.

For instance, and as illustrated in the non-limiting example of figure 2, the first predefined user gesture may be a first rotation in a first chosen direction that is carried out by at least one finger extremity of the user around the displayed first graphical element GE1. In this first example the first rotation is carried out by two finger extremities that touch the touchscreen TS in two contact points CP approximately parallel to two opposite sides of the first graphical element GE1. Here, the first direction is clockwise and the first rotation is approximately equal to 90°, as illustrated by arrows F1 and F2.

Other first user gestures than a rotation may be predefined.

During step (ii) one attaches the first graphical element GE1 to an area of at least one virtual screen VSk, that is associated to every other workspace WSj' (j' ≠ j), which is exactly the same as its chosen area in the virtual screen (VS1) associated to the first workspace WS1 and to which it was initially attached. Such an attachment is intended for allowing the service, represented by the first graphical element GE1, to be accessed by the user when he (inter)acts with finger(s) on this first graphical element GE1 while a virtual screen VSk of another workspace WSj' than the first one WSj, to which has been newly attached the first graphical element GE1, is displayed on the touchscreen TS.

In the non-limiting example illustrated in figures 3 and 4, the detection of the first predefined user gesture around the first graphical element GE1 displayed in the first virtual screen VS1 associated to the first workspace WS1 (figure 2) induces the attachment of this first graphical element GE1 to the first virtual screens VS1 associated to the second WS2 and third WS3 workspaces.

So, in this example of embodiment the first graphical element GE1 is attached to the same chosen area of only a chosen one of the virtual screens VSk associated to the different workspaces WSj. This virtual screen is preferably the first one (k = 1) which is generally the main one of a workspace WSj.

But in a variant this detection of the first predefined user gesture could induce automatically, if desired, the attachment of this first graphical element GE1 to each virtual screen VSk associated to each workspace WSj (whatever the value of index j), when at least one workspace is associated to at least two virtual screens.

It is important to note that sometimes another graphical element may have been previously attached in an area of a virtual screen VSk, associated to another workspace WSj' than the first one WSj, that is identical to the chosen area of the first graphical element GE1. When such a situation is detected by the second processing means PM2, it may compute a new area for the first graphical element GE1, so that the service it represents could be accessed by the user when he acts on it (GE1) in this new area while the virtual screen VSk of this other workspace WSj' is displayed on the touchscreen TS. In a variant, the second processing means PM2 may compute a new area for the other graphical element, so that the service it represents could be accessed by the user when he acts on it in this new area while the virtual screen VSk of this other workspace WSj' is displayed on the touchscreen TS.

For instance, and as illustrated in the non-limiting examples of figures 2 to 8, when a graphical element GEi has been newly attached to an area of at least one virtual screen VSk associated to a workspace WSj (following upon a gesture detection), it can be displayed with an appearance that is different from the one it possessed before this attachment. This appearance modification is intended for signalling to the user that a graphical element GEi is bound across several virtual screens VSk. Any type of appearance modification can be envisaged, and notably a change of colour or a highlighting or else addition of stitches, for instance.

The method may further comprise a step (iii) during which a second predefined user gesture may be detected by the first processing means PM1 in a zone of the touchscreen TS where the first graphical element GE1 is displayed into the virtual screen VSk associated to the first workspace WS1, to which it was initially attached. In this case, the method also comprises further a step (iv) during which one (PM2) stops attaching this first graphical element GE1 to the area of each virtual screen VSk associated to each workspace WSj' different from the first one WS1. Thus, the first graphical element GE1 cannot be anymore displayed into each virtual screen VSk associated to each workspace WSj' different from the first one WS1, but it remains attached at least to the virtual screen VS1 associated to the first workspace WS1 to which it was initially attached.

For instance, the second predefined user gesture can be the opposite of the first predefined user gesture. So, in this case, the second predefined user gesture is a second rotation in a second chosen direction that is opposite to the first direction and carried out by at least one finger extremity of the user around the displayed first graphical element GE1. In the described example the second rotation can be carried out by two finger extremities that touch the touchscreen TS in two contact points CP approximately parallel to two opposite sides of the first graphical element GE1. Here, the second direction is counter clockwise and the second rotation is approximately equal to 90°.

Other second user gestures than a rotation may be predefined.

The method may further comprise a step (v) during which the second predefined user gesture may be detected by the first processing means PM1 in a zone of the touchscreen TS where the first graphical element GE1 is displayed into the virtual screen VSk associated to a second workspace WSj' different from the first one WS1. In this case, the method also comprises further a step (vi) during which one (PM2) stops attaching the first graphical element GE1 to the area of each virtual screen VSk associated to this second workspace WSj'. Thus, the first graphical element GE1 cannot be anymore displayed into each virtual screen VSk associated to the second workspace WSj', but it remains attached at least to the virtual screen VS1 associated to the first workspace WS1 to which it was initially attached and to at least one virtual screen VSk associated to every other workspace WSj" different from the first WS1 and second WSj' ones.

The method may further comprise a step (vi) during which a third predefined user gesture may be detected by the first processing means PM1 in a zone of the touchscreen TS where a second graphical element GE2 is displayed into another area of a virtual screen VSk associated to a workspace WSj. In this case, the method also comprises further a step (vii) during which one (PM2) attaches this second graphical element GE2 to the other area of each virtual screen VSk associated to at least this workspace WSj. Such an attachment is intended for allowing the service, represented by the second graphical element GE2, to be accessed by the user when he (inter)acts with finger(s) on this second graphical element GE2 while a virtual screen VSk of at least this workspace WSj, to which has been newly attached the second graphical element GE2, is displayed on the touchscreen TS.

So, in this embodiment the detection of a first user gesture is intended for binding a graphical element GEi from a virtual screen of a workspace WSj to another virtual screen of every other workspace WSj', while the detection of a third user gesture is intended for binding a graphical element GEi from a virtual screen of a workspace WSj to every other virtual screen of at least this workspace WSj.

For instance, and as illustrated in the non-limiting example of figure 6, the third predefined user gesture may be a third rotation in the first chosen direction that is carried out by at least one finger extremity of the user around the displayed second graphical element GE2. In this second example the third rotation is carried out by two finger extremities that touch the touchscreen TS in two contact points CP approximately parallel to two opposite sides of the second graphical element GE2. Here, the first direction is clockwise and the third rotation is approximately equal to 150°, as llustrated by arrows F3 and F4.

Other third user gestures than a rotation may be predefined.

In the non-limiting example illustrated in figures 5 to 8, the detection of the first predefined user gesture around the first graphical element GE1 displayed in the first virtual screen VS1 associated to the second workspace WS2 (figure 5) induces the attachment of this first graphical element GE1 to the first virtual screen VS1 associated to the first workspace WS1, while the detection of the third predefined user gesture around the second graphical element GE2 displayed in the first virtual screen VS1 associated to the first workspace WS1 (figure 6) induces the attachment of this second graphical element GE2 to the second virtual screen VS2 associated to the first workspace WS1 (figure 7) and to the first VS1 and second VS2 virtual screens associated to the second workspace WS2 (figures 5 and 8).

In the case where the method comprises steps (vi) and (vii), it may further comprise a step (viii) during which a fourth predefined user gesture may be detected by the first processing means PM1 in a zone of the touchscreen TS where the second graphical element GE2 is displayed into another area of a virtual screen VSk associated to a workspace WSj. In this case, the method also comprises further a step (ix) during which one (PM2) stops attaching this second graphical element GE2 to the other area of each virtual screen VSk associated to at least this workspace WSj. Thus, the second graphical element GE2 cannot be anymore displayed into each virtual screen VSk associated to at least this workspace WSj, but it remains attached at least to the virtual screen associated to the workspace to which it was initially attached.

For instance, the fourth predefined user gesture can be the opposite of the third predefined user gesture. So, in this case, the fourth predefined user gesture is a fourth rotation in a second chosen direction that is opposite to the first direction and carried out by at least one finger extremity of the user around the displayed second graphical element GE2. In the described example the fourth rotation can be carried out by two finger extremities that touch the touchscreen TS in two contact points CP approximately parallel to two opposite sides of the second graphical element GE2. Here, the second direction is counter clockwise and the fourth rotation is approximately equal to 150°.

Other fourth user gestures than a rotation may be predefined.

The invention allows to minimize the effort (in terms of interaction steps) required by a user to create and access to graphical elements (or resources) on the touchscreen of his electronic equipment, and therefore allows him to make them span across several dimensions in the virtual display space.

The invention is not limited to the embodiments of method and device described above, only as examples, but it encompasses all alternative embodiments which may be considered by one skilled in the art within the scope of the claims hereafter.

## Claims

1. Method for organizing display of graphical elements (GEi), each representing at least one service, on a touchscreen (TS) of an electronic equipment (EE) comprising at least two workspaces (WSj), each graphical element (GE1) being initially attached to an area of a virtual screen associated to a workspace (WSj), said method comprising a step (i) during which a first predefined user gesture is detected in a zone of said touchscreen (TS) where a graphical element (GE1) is displayed, and a step (ii) during which one attaches said graphical element (GE1) to its area in at least one virtual screen associated to every other workspace (WSj'), so that said service represented by said graphical element (GE1) could be accessed by the user when he acts on said graphical element (GE1) while the virtual screen of another workspace (WSj') than the first one (WSj) is displayed on said touchscreen (TS).

2. Method according to claim 1, wherein said first predefined user gesture is a first rotation in a first chosen direction.

3. Method according to one of claims 1 and 2, wherein in step (ii), when a workspace (WSj) is associated to at least two virtual screen, one attaches said graphical element (GE1) to said area of each one of said virtual screens associated to this workspace (WSj).

4. Method according to one of claims 1 and 2, wherein in step (ii), when a workspace (WSj) is associated to at least two virtual screens, one attaches said graphical element (GE1) to its area in a chosen one of said virtual screens associated to this workspace (WSj).

5. Method according to one of claims 1 to 4, wherein in step (ii), when another graphical element is detected in its area in a virtual screen associated to another workspace (WSj') than the first one (WSj), one computes a new area for said graphical element (GE1), so that said service represented by said graphical element (GE1) could be accessed by the user when he acts on said graphical element (GE1) in said new area while the virtual screen of this other workspace (WSj') is displayed on said touchscreen (TS).

6. Method according to one of claims 1 to 4, wherein in step (ii), when another graphical element is detected in its area in a virtual screen associated to another workspace (WSj') than the first one (WSj), one computes a new area for this other graphical element, so that the service it represents could be accessed by the user when he acts on it in this new area while the virtual screen of this other workspace (WSj') is displayed on the touchscreen TS.

7. Method according to one of claims 1 to 6, wherein it comprises a step (iii) during which a second predefined user gesture is detected in a zone of said touchscreen (TS) where said graphical element (GE1) is displayed into the virtual screen associated to said first workspace (WSj), and a step (iv) during which one stops attaching said graphical element (GE1) to its area in each virtual screen associated to each workspace (WSj') different from the first one (WSj), so that said graphical element (GE1) be no more displayed into each virtual screen associated to each workspace (WSj') different from the first one (WSj).

8. Method according to one of claims 1 to 6, wherein it comprises a step (v) during which a second predefined user gesture is detected in a zone of said touchscreen (TS) where said graphical element (GE1) is displayed into the virtual screen associated to a second workspace (WSj') different from the first one (WSj), and a step (vi) during which one stops attaching said graphical element (GE1) to its area in each virtual screen associated to this second workspace (WSj'), so that said graphical element (GE1) be no more displayed into each virtual screen associated to said second workspace (WSj').

9. Method according to one of claims 7 and 8 in combination with claim 2, wherein said second predefined user gesture is a second rotation in a second chosen direction opposite to said first direction.

10. Method according to one of claims 1 to 9, wherein it comprises a step (vi) during which a third predefined user gesture is detected in a zone of said touchscreen (TS) where another graphical element (GE2) is displayed into another area of a virtual screen associated to a workspace (WSj), and a step (vii) during which one attaches said other graphical element (GE2) to its other area in each virtual screen associated to at least this workspace (WSj), so that said service represented by said other graphical element (GE2) could be accessed by the user when he acts on said other graphical element (GE2) while the virtual screen of at least this workspace (WSj) is displayed on said touchscreen (TS).

11. Method according to claim 10, wherein said third predefined user gesture is a third rotation in a first chosen direction.

12. Method according to one of claims 10 and 11, wherein it comprises a step (viii) during which a fourth predefined user gesture is detected in a zone of said touchscreen (TS) where said other graphical element (GE1) is displayed into a virtual screen associated to a workspace (WSj), and a step (ix) during which one stops attaching said other graphical element (GE2) to its other area in each virtual screen associated to at least this workspace (WSj), so that said other graphical element (GE2) be no more displayed into each virtual screen associated to at least this workspace (WSj).

13. Method according to claim 12, wherein said fourth predefined user gesture is a fourth rotation in a second chosen direction opposite to said first direction.

14. Method according to one of claims 1 to 13, wherein, once a graphical element (GE1, GE2) has been newly attached to an area of at least one virtual screen associated to a workspace (WSj), it is displayed with an appearance that is different from the one it possessed before this attachment.

15. Computer program product comprising a set of instructions arranged, when it is executed by processing means, for performing the method according to one of the preceding claims to allow organization of the display of a graphical element (GE1) representing at least one service on a touchscreen (TS) of an electronic equipment (EE) comprising at least two workspaces (WSj).

16. Device (D) for an electronic equipment (EE) comprising a touchscreen (TS) and at least two workspaces (WSj) each associated with at least one virtual screen, and a first one of said workspaces (WSj) being associated to a virtual screen comprising an area to which a graphical element (GE1) representing at least one service is initially attached, wherein it comprises first processing means (PM1) arranged for detecting a first predefined user gesture in a zone of said touchscreen (TS) where said graphical element (GE1) is displayed, and a second processing means (PM2) arranged, when said first predefined user gesture has been detected, for attaching said graphical element (GE1) to its area in at least one virtual screen associated to every other workspace (WSj'), so that said service represented by said graphical element (GE1) could be accessed by the user when he acts on said graphical element (GE1) while the virtual screen of another workspace (WSj') than the first one (WSj) is displayed on said touchscreen (TS).
